# EUROPÄISCHE PATENTSCHRIFT

(11) **EP 3 099 444 B1**
(45) Veröffentlichungstag und Bekanntmachung des Hinweises auf die Patenterteilung: **29.08.2018**
(21) Anmeldenummer: 15708708.1
(22) Anmeldetag: 27.01.2015
(51) Int. Cl.: B23K 20/12

(54) **VERFAHREN UND VORRICHTUNG ZUM RUEHRREIBSCHWEISSEN VON MATERIALIEN UNTERSCHIEDLICHER DICKE UND BEI KEHLNAEHTEN**
METHOD AND DEVICE FOR FRICTION STIR WELDING MATERIALS OF DIFFERENT THICKNESSES AND HAVING FILLET WELDS
PROCÉDÉ ET DISPOSITIF DE SOUDAGE PAR FRICTION-MALAXAGE DE MATÉRIAUX D'ÉPAISSEUR DIFFÉRENTE ET EN CAS DE SOUDURES D'ANGLE

(30) Priorität: 28.01.2014 DE 102014001050
(43) Veröffentlichungstag der Anmeldung: 07.12.2016
(73) Patentinhaber: Grenzebach Maschinenbau GmbH, 86663 Asbach-Baeumenheim (DE)
(72) Erfinder: WEIGL, Markus, 86609 Donauwörth (DE); FEINEIS, Alexander, 86609 Donauwörth (DE); CHRISTOPH, Sascha, 86609 Donauwörth (DE); KUNZ, Matthias, 86660 Tapfheim (DE)
(74) Vertreter: Kindermann, Peter
(86) Internationale Anmeldenummer: PCT/DE2015/000022
(87) Internationale Veröffentlichungsnummer: WO 2015/113542

(56) Entgegenhaltungen:
- WO-A1-00/02704
- DE-A1-102010 027 291
- DE-A1-102010 054 453
- DE-U1-202014 000 747

## Beschreibung

Die Erfindung betrifft ein Verfahren und eine Vorrichtung zum Rührreibschweißen von Materialien unterschiedlicher Dicke und bei Kehlnähten.

Anfang der neunziger Jahre des vorigen Jahrhunderts wurde das Rührreibschweißen, oder auch Reibrührschweißen genannt, entwickelt. Das Rührreibschweißen wird unter anderem für das Schweißen von Aluminiumlegierungen mittlerweile in vielen relevanten Industriebereichen erfolgreich eingesetzt. Die Anwendungen reichen hierbei von Einzelstücken und Kleinserien bis hin zu größeren Serien. Zum wirtschaftlichen Erfolg tragen neben der hervorragenden Güte der Schweißnaht auch die hohe Reproduzierbarkeit und die geringen Vorbereitungsarbeiten und Aufwendungen zur Nachbearbeitung bei. Dieses Verfahren lässt sich sehr gut automatisieren und erlaubt eine Qualitätsüberwachung auf der Basis einer Maschinenüberwachung.

Beim Rührreibschweißen wird im Fügebereich der zu verbindenden Materialien mittels der Reibung zwischen einem rotierenden, gleichzeitig translatorisch bewegten und mit Druck aufgebrachten, Werkzeug Reibungswärme erzeugt. Das Werkzeug wird entlang des Fügebereichs bewegt und verrührt das plastifizierte Material im Inneren der Naht der zu verbindenden aneinander stoßenden Materialien. Der aufgebrachte Druck presst das plastifzierte Material zusammen. Am Ende dieser Naht wird das Werkzeug aus dem Verbindungsbereich herausgezogen und die Schweißnaht ist unmittelbar belastbar.

Aus der DE 10 2004 030 381 B3 ist ein Verfahren zur Online-Qualitätsprüfung beim Reibrührschweißen bekannt, dem die Zielsetzung zugrunde liegt, zuverlässig und einfach zu sein. Zur Lösung dieser Aufgabe wird beansprucht, dass ein Reibrührwerkzeug unter drehender Bewegung und Druckbeaufschlagung in das Material zu verschweißender Werkstücke eingeführt und entlang einer Verbindungsstelle der zu verschweißenden Werkstücke geführt wird, wobei die Druckbeaufschlagung und/oder die während des Reibrührschweißprozesses auftretenden Schwingungen des Reibrührwerkzeugs, der zu verschweißenden Werkstücke oder anderer durch den Schweißprozess angeregter Elemente in Abhängigkeit der Zeit gemessen werden und anschließend mittels Fourier-Transformation in Frequenz-Amplitudenspektren umgewandelt werden, und dass die ermittelten Frequenz-Amplitudenspektren zur Qualitätsprüfung der erzeugten Schweißverbindung mit Referenzwerten verglichen werden.

Weiter ist aus der WO 2007/006669 A1 ein Rührreibschweißwerkzeug sowie ein Verfahren und eine Anordnung zur Echtzeit-Kontrolle eines Rührreibschweißprozesses durch Erfassung der Beschleunigungskräfte und/oder Schwingungen an dem Werkzeugkörper bekannt.

Aus der, auf die Anmelderin zurückgehenden, DE 10 2012 010 836 B3 sind ein Verfahren und eine Vorrichtung zur Verbesserung der Qualität der Schweißnaht beim Rührreibschweißen bekannt, der die Zielsetzung zugrunde liegen, die Standzeit des Rührreibwerkzeugs von ca. 2 Stunden auf 15 Stunden zu erhöhen und die Qualität der Fügenaht so zu erhöhen, dass keinerlei Nachbearbeitung erforderlich ist. Dies wird erreicht mit einer Vorrichtung mit den folgenden Merkmalen:
a) einer Aufnahmeplatte mit einem Antriebskopf und einem Spindellager zur Aufnahme einer Reibschweißspitze, wobei im Spindellager eine spiralförmig ausgearbeitete Transportschnecke die zum Abtransport von nicht benötigtem Material-Auftrag dient, in schräg nach außen führende Öffnungen mündet, b) die Längssachse des Spindellagers ist gegen die Vertikale in einem Winkel von 2,8 bis 3,2 Grad geneigt, c) die Gleitfläche der Drehspindel besteht aus einer ebenen Gleitfläche und besonders zur Verschweißung von kurvenförmigen Nähten aus jeweils einer, auf zwei gegenüber liegenden Seiten anschließenden, zur Gleitfläche in einem spitzen Winkel geneigten, in sich gewölbten Gleitfläche, und d) die Reibschweißspitze weist die Form eines Kegelstumpfes auf bei dem die Deckfläche in der Mitte erhöht ist, und wobei die Mantelfläche des Kegelstumpfes durch sechs trapezförmige Flächenstücke gebildet wird von denen drei Flächenstücke jeweils am Umfang gleichmäßig verteilt sich in einem Winkel von 120 Grad gegenüber liegen und einen größeren Anteil als 1/6 am Kreisumfang beanspruchen.

Für das Verschweißen besonderer Ausgestaltungen der jeweils verwendeten Fügepartner, wie zum Beispiel unterschiedlicher Dicken der Fügepartner auch bei nichtlinearen Verbindungen, oder das Verschweißen von Fügepartnern die im Winkel angeordnet sind, so genannten Kehlnähten, sind bisher beim Rührreibschweißen keine geeigneten Maßnahmen bekannt.

Aus der den Oberbegriff des Patentanspruchs 1 bildenden Druckschrift WO 00/02704 A1 ist eine Vorrichtung zum Rührreibschweißen von Materialien unterschiedlicher Dicke und bei Kehlnähten bekannt, wobei eine Aufnahmeplatte einen Antriebskopf und einen Schweißschuh mit einem Pinlager für einen Schweißpin aufweist, bei dem die Längsachse des Pinlagers gegen die Vertikale in einem Winkel von 0 bis 5 Grad geneigt werden kann.

Aus der Druckschrift DE 10 2010 027 291 A1 ist ferner ein Verfahren und eine Vorrichtung zum Rührreibschweißen bekannt, wobei ein Schweißpin axial verschiebbar und getrennt von der Schulterfläche eines Schlittens in einer z-Richtung ein- und ausgefahren werden kann.

Schließlich ist aus der Druckschrift DE 10 2010 054453 A1 ein weiteres Verfahren sowie eine zugehörige Vorrichtung zum Fügen von Werkstücken mittels Rührreibschweißen bekannt, wobei die miteinander zu verbindenden Werkstücke zueinander Kehlnähte aufweisen können.

Demgegenüber liegt der Erfindung die Aufgabe zugrunde, eine Vorrichtung und ein Verfahren zum Rührreibschweißen zu schaffen, wobei Materialien unterschiedlicher Dicke sowie Kehlnähte verarbeitet werden können.

Erfindungsgemäß wird diese Aufgabe hinsichtlich der Vorrichtung durch die Merkmale des neuen Patentanspruchs 1 und hinsichtlich des Verfahrens durch die Maßnahmen des neuen Patentanspruchs 5 gelöst.

In den Unteransprüchen sind weitere vorteilhafte Ausgestaltungen der Erfindung gekennzeichnet.

Die erfindungsgemäße Vorrichtung wird im Folgenden näher beschrieben.

Es zeigen im Einzelnen:
Fig. 1: eine Seitenansicht einer Anordnung zum Rührreibschweißen,
Fig. 2: Darstellungen zum Schweißen von Kehlnähten,
Fig.3: Darstellungen zum Schweißen von verschiedenen Materialdicken,
Fig.4: Darstellungen zur Halterung eines Schweißpins,
Fig.5: einen Querschnitt durch eine Schnell-Einstellung eines Schweißpins,
Fig.6: eine räumliche Ansicht eines Schweißschuhs 4 für Kehlnähte, und
Fig.7: eine räumliche Ansicht eines Schweißschuhs 4 für unterschiedlich dicke Materialien.

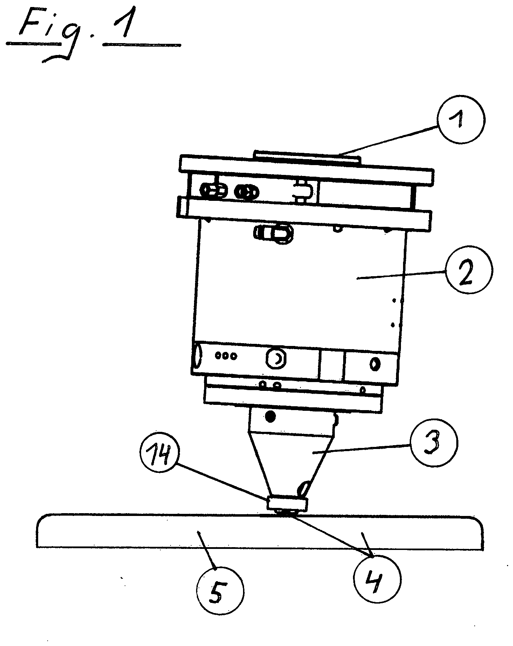

In der Fig. 1 ist eine Seitenansicht einer Anordnung zum Rührreibschweißen gezeigt. Eine Aufnahmeplatte 1, die von einem Roboterarm geführt sein kann, trägt einen Antriebskopf 2 mit einem Haltekegel 3 zur Aufnahme eines Schweißschuhs 4 mit einem Pinlager für einen Schweißpin, wobei ein Schweißschuh 4 mittels eines Halterings 14 auf dem Haltekegel 3 befestigt ist. Das zu fügende Bauteil ist in dieser Darstellung mit 5 bezeichnet.

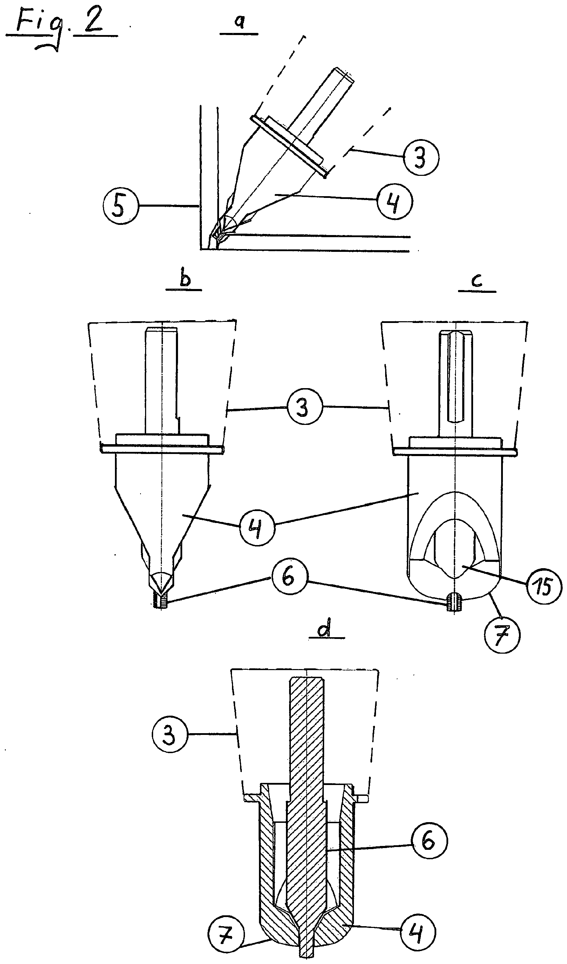

Die Fig.2 zeigt Darstellungen zum Schweißen von Kehlnähten.

In der Fig.2a ist eine Vorderansicht einer Anordnung zweier, im Winkel zueinander angeordneter, zu verschweißender Bleche 5 dargestellt die mittels einer Vorrichtung zum Rührreibschweißen über eine Kehlnaht verbunden werden. Gestrichelt ist hier ein Haltekegel 3 und weiter ein Schweißschuh 4 mit einem Pinlager zu erkennen.

In der Fig. 2b ist die Vorrichtung aus der Fig. 2a ohne die beiden Bleche 5 in der Vorderansicht dargestellt. Neben dem Schweißschuh 4 und dem Haltekegel 3 ist hier "ein Schweißpin 6 zu sehen. In der Darstellung der Fig. 2c ist die Schuh - Gleitfläche und die einschließende Schuh - Glättfläche 7 zu erkennen, da die Ansichtsseite um 90 Grad gegenüber der daneben gezeigten Darstellung gedreht ist. Der Austrittsbereich des nicht verwendeten Materials beim Rührreibschweiß - Vorgang ist mit 15 bezeichnet. Diese beiden Teilfiguren zeigen die Drehung auch in der Darstellung an der Veränderung der Ansicht an der Halterung des Haltekegels 3.

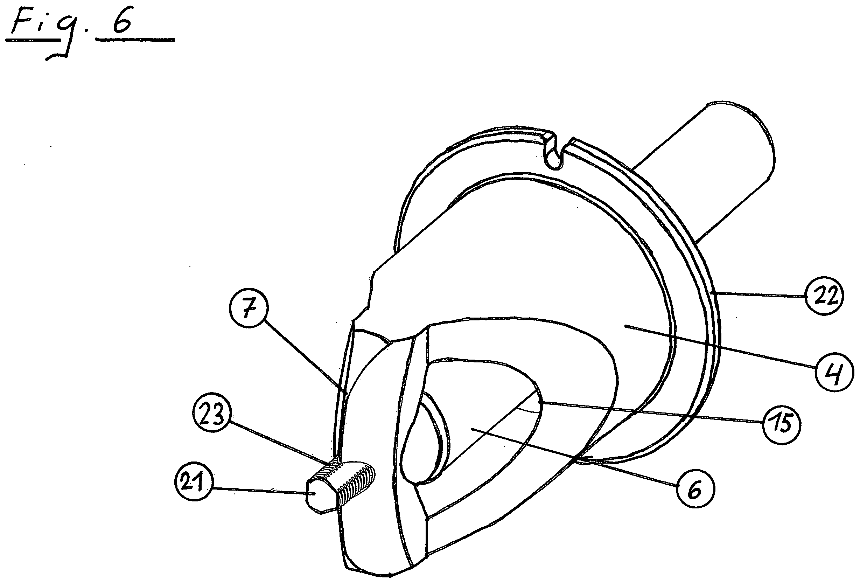

Die Fig.2d zeigt wiederum die Darstellung der Fig. 2c im Schnitt mit den vorher beschriebenen Bezugszeichen. Eine räumliche Darstellung zeigt die Fig.6.

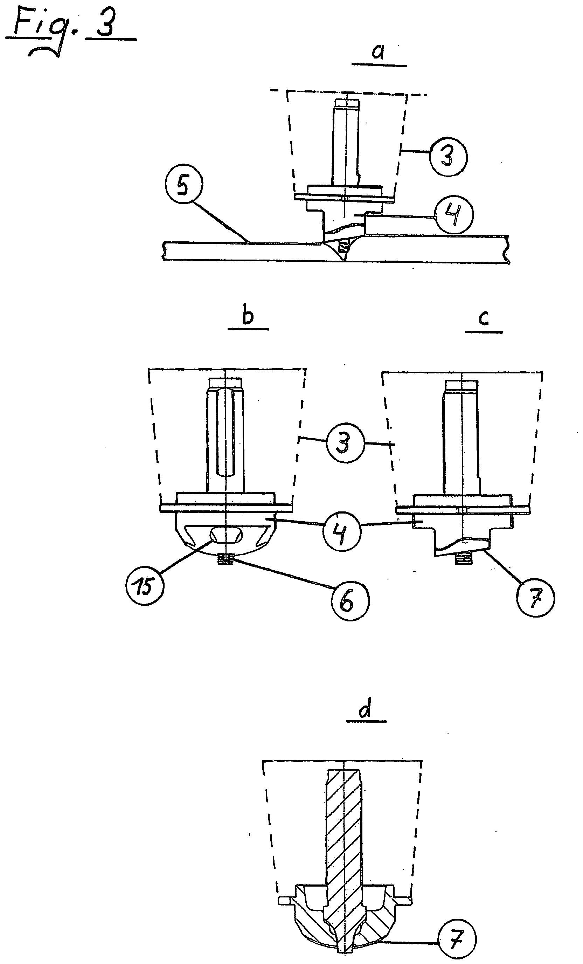

Die Fig. 3 zeigt Darstellungen zum Schweißen von verschiedenen Materialdicken. Entsprechend den Verhältnissen bei der Darstellung des Schweißens von Kehlnähten ist in der Fig.3a in der Seitenansicht der Schweißvorgang bei Materialien verschiedener Materialdicken gezeigt. Auch hier sind der Haltekegel 3, der entsprechende Schweißschuh 4 und das zu fügende Bauteil 5, sowie der Schweißpin 6 und der Austrittsbereich 15 für das überflüssige Schweißmaterial bezeichnet. Auch in dieser Darstellung ist aus der Fig.3b und der um 90 Grad gedrehten Fig.3c zu erkennen welche Form der hier verwendete Schweißschuh 4 in den verschiedenen Ansichtsebenen aufweist. Eine Vorstellung bezüglich der realen Form eines Schweißschuhs ergibt sich aus den gleitenden Übergängen von einer Ansichtsebene zur anderen. Der Fachmann kann auf diese Weise die gesamte Oberfläche 7 eines Schweißschuhs nacharbeiten.

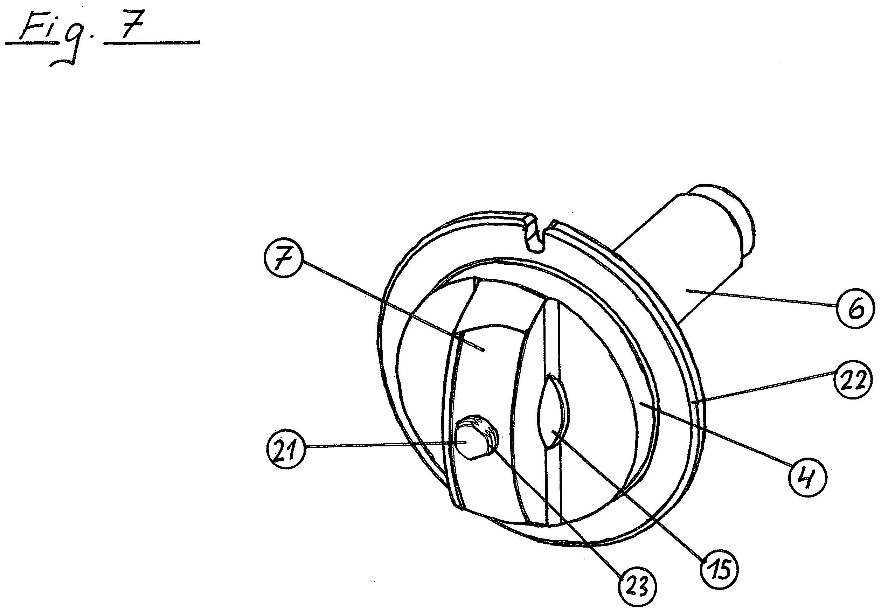

Eine räumliche Darstellung zeigt weiterhin die Fig.7.

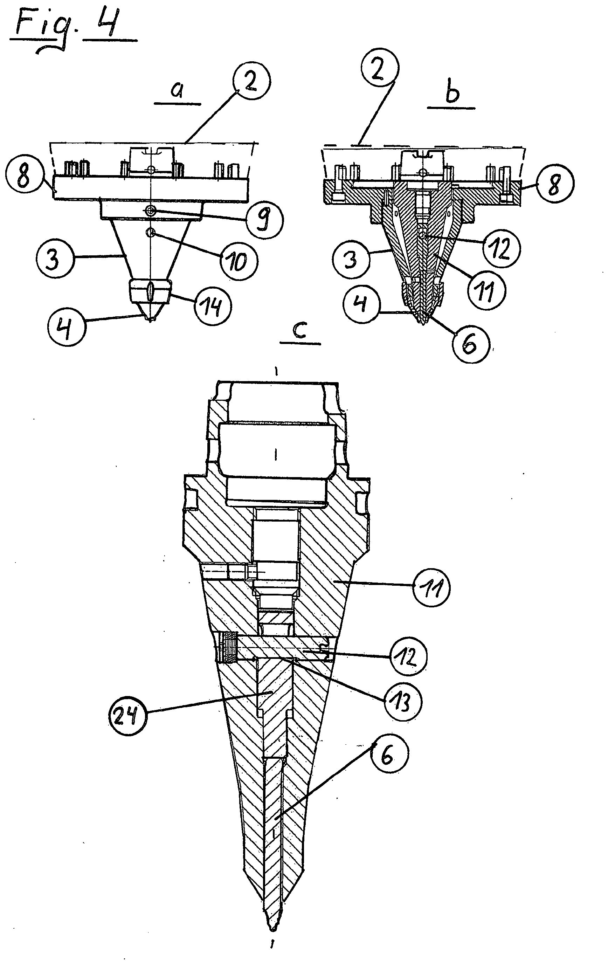

Die Fig.4 zeigt Darstellungen zur Halterung eines Schweißpins. In der Fig.4a ist hierbei der Antriebskopf 2 mit seinem Aufnahme - Flansch 8 für den Haltekegel 3 und mit seiner Schweißschuh - Halterung 14 für den Schweißschuh 4 zu sehen. In dieser Ansicht sind ferner eine Halteschraube 9 für den Haltekegel 3 aus der Fig.4c und eine Zugangsbohrung 10 für ein Stellelement 12 zu erkennen. Dieses Stellelement kann zum Beispiel eine Schraube sein.

Die Fig.4b zeigt dieselbe Darstellung wie die Fig.4a in einer Schnittzeichnung. Zusätzlich ist in dieser Darstellung der Schweißpin 6, das Stellelement 12 und der Pin - Aufnahmekegel 11 im Querschnitt bezüglich seiner Anordnung im Haltekegel 3 zu sehen.

In der Fig.4c ist der Pin - Aufnahmekegel 11 noch einmal groß einzeln herausgezeichnet. Hier ist besonders die Halterung des Schweißpins 6 in der Längsachse des Pin - Aufnahmekegels 11 dargestellt. Zur Längeneinstellung des Schweißpins 6 dient hierbei ein, dem Schweißpin 6 vorgelagertes, Pin - Stellelement 24. Dieses Pin - Stellelement weist eine Exzenter - Fläche 13 auf, die mittels einer Drehung des Stellelements 12 im Pin - Aufnahmekegel 11 den Schweißpin 6 in der Länge zu verschieben erlaubt. Bei der Exzenter - Fläche 13 kann es sich auch um eine Kurvenscheibe oder eine Polygonstruktur handeln. Hier sind Verschiebungen der Längsachse des Schweißpins 6 im Bereich von 1/100 Millimetern möglich.

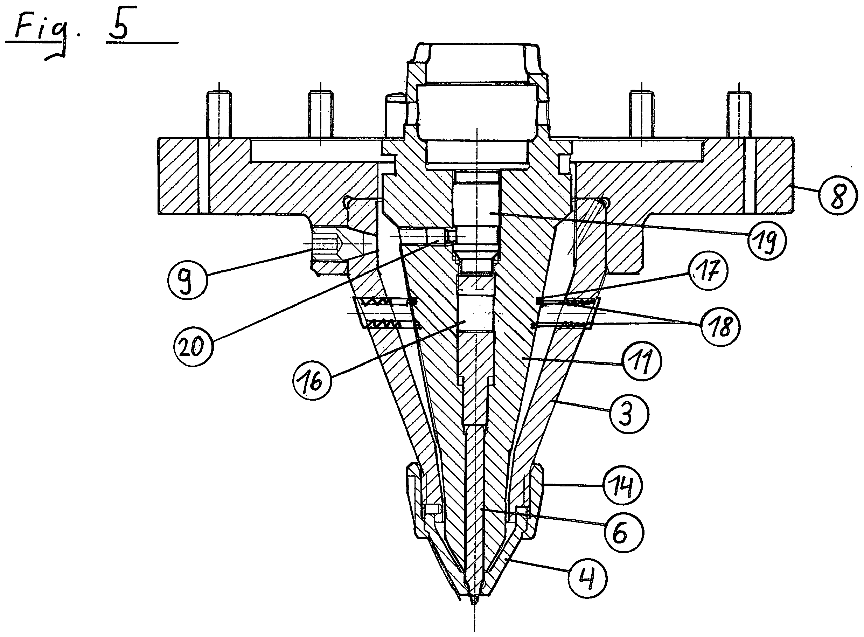

Fig. 5 zeigt einen Querschnitt durch eine Schnell - Einstellung eines Schweißpins. Hier ist der Aufnahmeflansch 8 für den Haltekegel 3 und seiner Verbindung mit dem Pin - Aufnahmekegel 11 detailliert herausgestellt. Der Schweißschuh 4 und das Pinlager werden von dem Schweißschuh - Haltering 14 gehalten. Anstelle des Stellelements 12 zur Längeneinstellung des Schweißpins 6 wirkt hier ein Piezo - Element 16. Zur Stromversorgung des Piezo - Elements 16 dienen Kontakt - Schleifringe 17 und federbelastete Kontaktbürsten 18. Auch hiermit lassen sich Verschiebungen der Längsachse des Schweißpins 6 im Bereich von 1/100 Millimetern erreichen. Jedoch kann hierbei die Längeneinstellung des Schweißpins 6 die jeweils bei dem Einsetzen eines neuen Schweißpins 2 erfolgen muss, automatisch vorgenommen werden. Anstelle eines Piezo - Elements 16 sind auch hydraulische bzw. elektrohydraulische Stellsysteme denkbar.

Als Gegenlage für den Schweißpin 6 dient am oberen Ende des Pin - Aufnahmekegels 11 der Pin - Anschlag 19. Dieser Pin - Anschlag 19 kann mittels eines Feingewindes an seiner Außenseite im Pin - Aufnahmekegel 11 hinsichtlich seiner Längsachse mittels eines entsprechenden Werkzeugs im Genauigkeitsbereich von 1/10 Millimetern verstellt werden. Die Halteschraube 20 dient dem Feststellen des Pin - Anschlags 19.

Fig.6 zeigt eine räumliche Ansicht eines Schweißschuhs 4 für Kehlnähte. Die Bezugszeichen entsprechen den vorher schon beschriebenen. Zusätzlich ist hier die Schweißpin - Spitze 21 mit ihrem Außengewinde 23 eingezeichnet. Die Drehrichtung dieses Außengewindes 23 verläuft entgegengesetzt wie die Drehrichtung des Schweißpins 6. Auf diese Weise ist gewährleistet, dass Material beim Schweißvorgang zu der Schweißpin - Spitze 23 zubewegt wird und dem Schweißvorgang erhalten bleibt. Der Aufnahmeflansch 22 dient der Befestigung des Schweißschuhs 4.

Fig.7 zeigt eine räumliche Ansicht eines Schweißschuhs 4 für unterschiedlich dicke Materialien. Für die Bezugszeichen gilt entsprechendes wie bei der Fig.6.

Zur Überwachung der Schweißvorgänge wird der Anpressdruck der Gleitflächen 7 der jeweils verwendeten Schweißschuhe 4 einstellbar gestaltet, und es werden die jeweilige Einstellungen gemessen, angezeigt und aufgezeichnet.

Der Anpressdruck der Gleitflächen 7 ist jedoch nicht nur einstellbar, sondern er wird auch während des Schweißprozesses geregelt. Hierdurch werden während des Schweißprozesses auftretende Unregelmäßigkeiten im Bereich der Fügepartner automatisch ausgeglichen.

Desgleichen ist es vorgesehen, dass zur Fixierung der zu verschweißenden Bauteile Mittel verwendet werden, deren Anpressdruck einstellbar ist und bei denen der Anpressdruck überwacht wird.

Ferner ist vorgesehen, dass das Ergebnis des Schweißprozesses optisch überwacht und aufgezeichnet wird.

Die Steuerung der komplexen Bewegungsvorgänge und die Signalverarbeitung der verwendeten Sensoren erfordern ein spezielles Steuerungsprogramm.

### Bezugszeichenliste

- 1: Aufnahmeplatte (Roboterarm)
- 2: Antriebskopf
- 3: Haltekegel für Schweißschuh
- 4: Schweißschuh und Pinlager
- 5: zu fügendes Bauteil (Schweißgut)
- 6: Schweißpin
- 7: Schuh - Gleitfläche und Schuh - Glättfläche
- 8: Aufnahme - Flansch für den Haltekegel 3
- 9: Halteschraube mit Konus für den Haltekegel 3
- 10: Zugangsbohrung für die Stellschraube 12
- 11: Pin - Aufnahmekegel
- 12: Stellelement (Stellschraube)
- 13: Exzenter - Fläche
- 14: Schweißschuh - Haltering
- 15: Austrittsbereich für Material
- 16: Piezoelement (Pin - Längenseinstellung)
- 17: Kontakt - Schleifring
- 18: Kontaktbürsten (Feder - beaufschlagt)
- 19: Pin - Anschlag (Gegenlager)
- 20: Halteschraube für den Pin - Anschlag 19
- 21: Schweißpin - Spitze
- 22: Aufnahmeflansch für einen Schweißschuh
- 23: Gewinde in der Schweißpin - Spitze (gegenläufig zur Drehrichtung)
- 24: Pin - Stellelement

## Patentansprüche

1. Vorrichtung zum Rührreibschweißen von Materialien unterschiedlicher Dicke und bei Kehlnähten aufweisend eine Aufnahmeplatte (1) mit einem Antriebskopf (2) und einem Schweißschuh (4) mit einem Pinlager für einen Schweißpin (6), bei dem die Längsachse des Pinlagers gegen die Vertikale in einem Winkel von 0 bis 5 Grad geneigt werden kann,
**dadurch gekennzeichnet, dass**
a) eine Längeneinstellung des Schweißpins (6) mittels eines Stellelements (12) einstellbar ist, indem der Schweißpin (6) entlang seiner Längsachse verschiebbar ist, und
b) die Lage des Gegenlagers des Schweißpins (6) mittels eines einstellbaren Pin-Anschlagschlags (19) eingestellt und dieser Pin-Anschlag (19) zusätzlich mit einer Stellschraube (20) gesichert ist.

2. Vorrichtung nach Anspruch 1,
**dadurch gekennzeichnet,**
**dass** die Längeneinstellung des Schweißpins (6) mittels eines Piezoelements (16) erfolgt.

3. Vorrichtung nach Anspruch 1 oder 2,
**dadurch gekennzeichnet,**
**dass** der Anpressdruck von Gleitflächen (7) des Schweißschuhs (4) einstellbar ist, und die jeweilige Einstellung gemessen, angezeigt und aufgezeichnet wird, und dass der Anpressdruck der Gleitflächen (7) auch während des Schweißprozesses geregelt und somit Unregelmäßigkeiten im Bereich der Fügepartner ausgeglichen werden.

4. Vorrichtung nach einem der Ansprüche 1 bis 3,
**dadurch gekennzeichnet,**
**dass** zur Fixierung der zu verschweißenden Bauteile Mittel verwendet werden, deren Anpressdruck einstellbar ist und bei denen der Anpressdruck überwacht wird, wobei das Ergebnis des Schweißprozesses optisch überwacht und aufgezeichnet wird.

5. Verfahren zum Rührreibschweißen von Materialien unterschiedlicher Dicke und bei Kehlnähten mit den folgenden Merkmalen:
a) der Vorgang des Rührreibschweißens erfolgt sowohl bei Schweißverbindungen mit unterschiedlichen Materialdicken als auch bei Schweißverbindungen mit Kehlnähten mit derselben Anlage indem ein entsprechender Schweißschuh auf einen Haltekegel (3) aufgesetzt wird,
b) die Längsachse des Pinlagers kann gegen die Vertikale in einem Winkel von 0 bis 5 Grad geneigt werden,
c) eine Längeneinstellung des Schweißpins (6) ist mittels eines Stellelements (12) einstellbar, indem der Schweißpin (6) entlang seiner Längsachse verschiebbar ist, und
d) die Lage des Gegenanschlags des Schweißpins (6) ist mittels eines einstellbaren Pin-Anschlags (19) eingestellt und dieser Pin-Anschlag (19) ist zusätzlich mit einer Stellschraube (20) gesichert.

6. Verfahren nach Anspruch 5,
**dadurch gekennzeichnet,**
**dass** die Längeneinstellung des Schweißpins (6) mittels eines Piezoelements (16) erfolgt.

7. Verfahren nach einem der Ansprüche 5 oder 6,
**dadurch gekennzeichnet,**
**dass** der Anpressdruck von Gleitflächen (7) des Schweißschuhs (4) einstellbar ist und die jeweilige Einstellung gemessen, angezeigt und aufgezeichnet wird, und dass der Anpressdruck der Gleitflächen (7) auch während des Schweißprozesses geregelt und somit Unregelmäßigkeiten im Bereich der Fügepartner ausgeglichen werden.

## Claims

1. Device for friction stir welding materials of different thicknesses and having fillet welds comprising
a receiving plate (1) with a drive head (2) and a welding shoe (4) with a pin bearing for a welding pin (6), in which the longitudinal axis of the pin bearing can be inclined with respect to the vertical at an angle of 0 to 5 degrees,
**characterized in that**
a) a length adjustment of the welding pin (6) is adjustable by means of an adjusting element (12) by the welding pin (6) being displaceable along its longitudinal axis, and
b) the position of the counter-bearing of the welding pin (6) is adjusted by means of an adjustable pin stop stop (19) and this pin stop (19) is additionally secured by an adjusting screw (20).

2. Device according to Claim 1,
**characterized**
**in that** the length adjustment of the welding pin (6) is performed by means of a piezo element (16).

3. Device according to Claim 1 or 2,
**characterized**
**in that** the pressing pressure of sliding surfaces (7) of the welding shoe (4) is adjustable, and the respective adjustment is measured, indicated and recorded, and in that the pressing pressure of the sliding surfaces (7) is also automatically controlled during the welding process and consequently irregularities in the region of the parts to be joined are evened out.

4. Device according to one of Claims 1 to 3, **characterized**
**in that** means of which the pressing pressure is adjustable and for which the pressing pressure is monitored are used for fixing the components to be welded, the result of the welding process being optically monitored and recorded.

5. Method for friction stir welding materials of different thicknesses and having fillet welds with the following features:
a) the operation of friction stir welding is performed with the same installation both in the case of welded connections with different materials and in the case of welded connections with fillet welds, in that a corresponding welding shoe is placed onto a holding cone (3),
b) the longitudinal axis of the pin bearing can be inclined with respect to the vertical at an angle of 0 to 5 degrees,
c) a length adjustment of the welding pin (6) is adjustable by means of an adjusting element (12) by the welding pin (6) being displaceable along its longitudinal axis, and
d) the position of the counter-stop of the welding pin (6) is adjusted by means of an adjustable pin stop (19) and this pin stop (19) is additionally secured by an adjusting screw (20).

6. Method according to Claim 5,
**characterized**
**in that** the length adjustment of the welding pin (6) is performed by means of a piezo element (16).

7. Method according to either of Claims 5 and 6,
**characterized**
**in that** the pressing pressure of sliding surfaces (7) of the welding shoe (4) is adjustable and the respective adjustment is measured, indicated and recorded, and in that the pressing pressure of the sliding surfaces (7) is also automatically controlled during the welding process and consequently irregularities in the region of the parts to be joined are evened out.

## Revendications

1. Dispositif de soudage par agitation-friction de matériaux de différentes épaisseurs et lors des soudures d'angle, possédant
une plaque d'accueil (1) munie d'une tête d'entraînement (2) et d'un patin de soudage (4) comprenant un support de broche pour une broche à souder (6), avec lequel l'axe longitudinal du support de broche peut être incliné à un angle de 0 à 5 degrés par rapport à la verticale,
**caractérisé en ce que**
a) un réglage en longueur de la broche à souder (6) peut être réglé au moyen d'un élément de réglage (12) **en ce que** la broche à souder (6) peut coulisser le long de son axe longitudinal, et
b) la position du contre-support de la broche à souder (6) est réglée au moyen d'une butée butée de broche (19) réglable et cette butée de broche (19) est en plus bloquée avec une vis de réglage (20).

2. Dispositif selon la revendication 1, **caractérisé en ce que** le réglage en longueur de la broche à souder (6) s'effectue au moyen d'un élément piézoélectrique (16).

3. Dispositif selon la revendication 1 ou 2, **caractérisé en ce que** la force de pressage de surfaces de glissement (7) du patin de soudage (4) est réglable, et le réglage correspondant est mesuré, affiché et enregistré, et **en ce que** la force de pressage des surfaces de glissement (7) est également régulée pendant le processus de soudage et les irrégularités dans la zone des partenaires de jointage sont ainsi compensées.

4. Dispositif selon l'une des revendications 1 à 3, **caractérisé en ce que** le blocage des éléments structuraux à souder est effectué en utilisant des moyens dont la force de pressage est réglable et avec lesquels la force de pressage est surveillée, le résultat du processus de soudage étant surveillé optiquement et enregistré.

5. Procédé de soudage par agitation-friction de matériaux de différentes épaisseurs et lors des soudures d'angle, ayant les caractéristiques suivantes :
a) l'opération de soudage par agitation-friction s'effectue à la fois lors des assemblages soudés avec différentes épaisseurs de matériau et lors des assemblages soudés avec des soudures d'angle avec le même équipement en posant un patin de soudage correspondant sur un cône de maintien (3),
b) l'axe longitudinal du support de broche peut être incliné à un angle de 0 à 5 degrés par rapport à la verticale,
c) un réglage en longueur de la broche à souder (6) peut être réglé au moyen d'un élément de réglage (12) en ce que la broche à souder (6) peut coulisser le long de son axe longitudinal, et
d) la position du contre-support de la broche à souder (6) est réglée au moyen d'une butée de broche (19) réglable et cette butée de broche (19) est en plus bloquée avec une vis de réglage (20).

6. Procédé selon la revendication 5, **caractérisé en ce que** le réglage en longueur de la broche à souder (6) s'effectue au moyen d'un élément piézoélectrique (16) .

7. Procédé selon l'une des revendications 5 ou 6, **caractérisé en ce que** la force de pressage des surfaces de glissement (7) du patin de soudage (4) est réglable, et le réglage correspondant est mesuré, affiché et enregistré, et **en ce que** la force de pressage des surfaces de glissement (7) est également régulée pendant le processus de soudage et les irrégularités dans la zone des partenaires de jointage sont ainsi compensées.
